Europäisches Patentamt

European Patent Office

Office européen des brevets

(11) Publication number: **0 191 509**
**B1**

## EUROPEAN PATENT SPECIFICATION

(45) Date of publication of patent specification: **26.10.88**

(21) Application number: **86200029.6**

(22) Date of filing: **09.01.86**

(51) Int. Cl.⁴: **B 24 B 23/02,** B 23 Q 11/00,
B 28 D 1/18, B 28 D 7/02,
B 24 B 55/10

(54) **Portable electrical milling and/or trimming machine tool for the machining with suction of produced chips and dust.**

(30) Priority: **18.01.85 IT 2053885 u**
**18.01.85 IT 2053985 u**

(43) Date of publication of application:
**20.08.86 Bulletin 86/34**

(45) Publication of the grant of the patent:
**26.10.88 Bulletin 88/43**

(84) Designated Contracting States:
**BE CH DE FR GB IT LI NL**

(56) References cited:
**EP-A-0 055 896**
**US-A-1 990 991**
**US-A-2 343 875**
**US-A-2 527 968**
**US-A-4 051 880**
**US-A-4 099 328**

(73) Proprietor: **Valentini, Guido**
**Via Comelico, 2**
**I-20135 Milano (IT)**

(72) Inventor: **Valentini, Guido**
**Via Comelico, 2**
**I-20135 Milano (IT)**

(74) Representative: **Marchi, Massimo et al**
**c/o Marchi & Mittler s.r.l. Viale Lombardia 20**
**I-20131 Milano (IT)**

Courier Press, Leamington Spa, England.

# Description

The object of the present invention is a portable electric milling and/or trimming tool for the machining with the suction of the chips and of the dust produced during the machining of wood, plastic material and/or fiberglass.

Portable tools of this type are known, which substantially comprise a body enclosing a vertical-axis electrical motor provided with a gripping handle, and slidingly assembled by means of a guide system relatively to a supporting plate provided with a central aperture for the passage of the tool actuated by the electrical motor. The guide system is constituted by at least a tube acting as a vertical guide and support, fastened onto the supporting plate onto which said body can slide by means of guide sleeves.

Whilst not in use the body containing the tool actuating motor is lifted, so that the tool rests above the supporting plate, during the machining operation the supporting plate is placed on the piece to be machined and the operator, by acting on the gripping handle, lets down the body encasing the motor, so that the tool, by penetrating through the aperture provided in the supporting plate comes to act on the piece.

During machining chips and dust of material are clearly formed, which disturb the visibility of the surface of the piece under machining. In order to obviate this drawback, the motor cooling air could be used suitably directed and/or conveyed towards the surface being machined.

This causes the dispersion of dust within the working premises, notably disturbing the operator.

To obviate such a drawback, suction means could be used such as hoods or flexible sleeves which did not completely solve the problem, or at least created an inconvenience for the operator just in the working area.

It is moreover known that portable electrical machines use various systems to allow either plunging operations or operations in fixed positions to be obtained.

One of such systems uses a locking-screw device directly acting on the rods of a support; such a system renders laborious the adjustment operations and on the other side does not allow the control of the depth, if the tool machine is used for plunging operations, once that the locking screws have been released.

Other types of tool machines are equipped with sliding external accessories, provided with guides and/or shoulder elements, which, even though they allow machinings of a certain precision to be carried out, require long and laborious assembling and positioning as well as adjustment operations.

Still another system envisages the use of supporting threaded rods, at least partly provided with micrometric adjustment means, manually actuated by thumbscrews. Such devices, even if they can be initially easily adjusted, by being not provided with locking systems, can undergo accidental variations of the adjustments, essentially due to the vibrations caused by running machine tool. It is moreover important to note that such a system does not allow plunging machining operations, in that the tool is rigidly linked to the supporting rods of the machine tool through said screw device.

A purpose of the present invention is to provide a machine tool of the above-indicated type provided with a system for sucking the chips and the dust produced by the machining totally provided inside the machine, hence eliminating any external components.

A further purpose of the present invention is that the said tool machine be provided with an adjustment system which allows plunging operations to be carried out with the possibility of a quick and precise adjustment of the stroke, and at the same time allows machining operations to be effected in selected fixed positions.

It must moreover be such as to allow an operator to perform easy and fast manoeuvres both for the adjustment and for the selection of the machining function, without it being necessary to modify by means of external fittings or the like the configuration of the machine tool, or to intervene on the supports thereof.

These and further purposes according to the present invention are achieved by accomplishing a portable electrical milling and/or trimming machine tool for the machining of material with the production of chips and/or dust, comprising a body encasing a vertical-axis electrical motor for the actuation of the tool, provided with a gripping handle and slidingly mounted by means of a guide system relatively to a support plate provided with a central aperture for the passage of the tool, characterized in that said machine incorporates a suction system for said chips and said dust comprising in said supporting plate at least a duct communicating on one side with suction openings coming in correspondence of said plate central aperture and on the other side with a duct concentrically formed around said guide system by a bellows sleeve surrounding this guide system, this latter duct being in its turn communicating, via channels provided inside the actuating motor enclosing body, with a tubular discharge element integrated inside the gripping handle, and ending with a connector.

According to a preferred embodiment, the channels of said suction system provided within the motor-enclosing body comprise a chamber for a suction fan directly keyed onto the driving shaft.

In this case, the machine tool has its exhauster incorporated and a collecting container for exhausted chips and dust may be connected to the connector provided on the gripping handle, either directly or indirectly though a pipe.

It is however also possible to use an external exhauster to be connected to the connector on the machine gripping handle.

The adoption of the suction system with channels and ducts entirely accomplished and provided in the inside of the milling and/or trimming machine tool, as envisaged according to the invention, makes the machine of more practical use, by eliminating any outer components, and allows a cheaper and faster assemblage than solutions envisaging the adoption of separate parts such as pipes, suction ports, and so forth.

Said guide system comprises preferably a plurality of elements, at least one of said elements being constituted by a rod bearing a graduated portion and a threaded portion, said graduated portion being sliding within a seat provided in said base plate, a locking means for said rod being provided, and said threaded portion complementarily coupling within a ring, it too being threaded, rotatably positioned within said upper body, elastic elements acting between said plate and said body being moreover provided.

An exemplifying embodiment of the machine according to the invention shall be disclosed hereinunder with reference to the attached drawings, wherein:

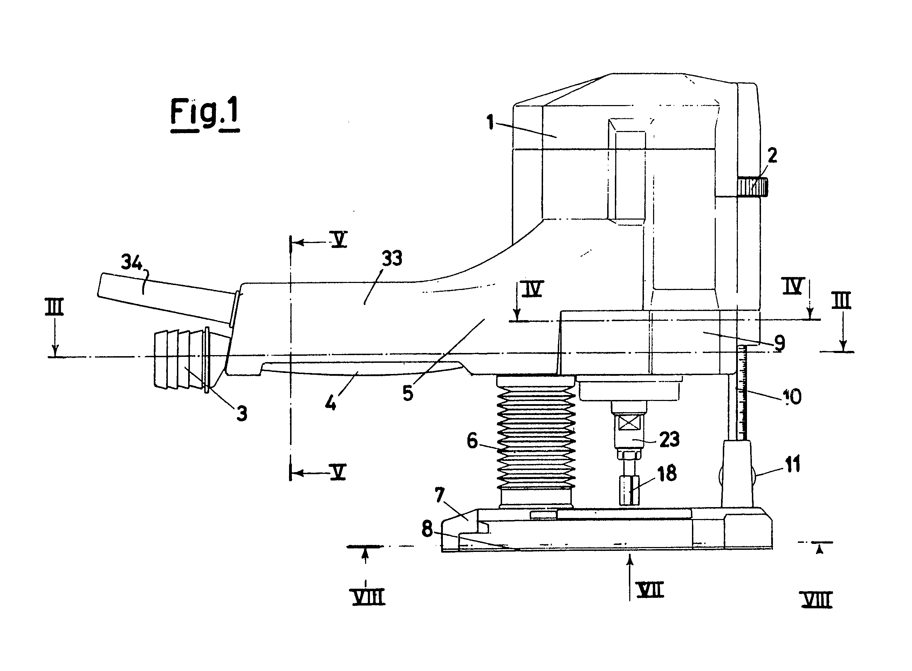

Fig. 1 is an elevation side view of the machine,

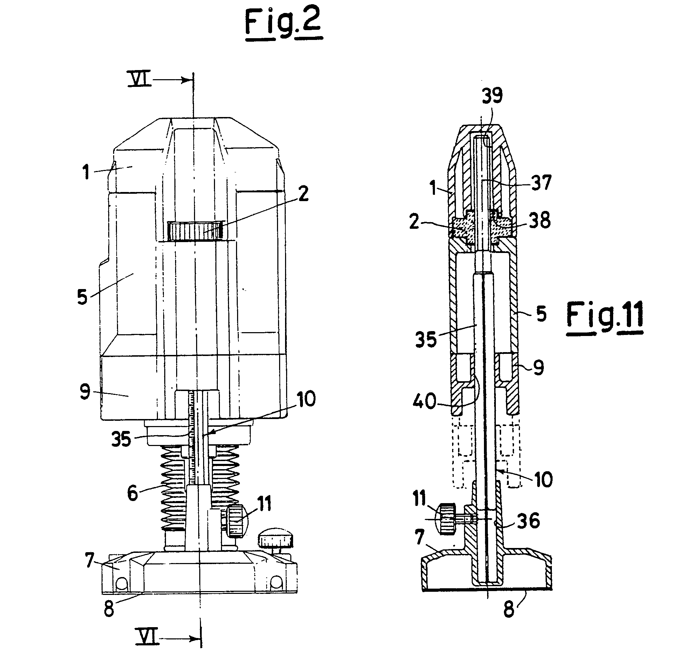

Fig. 2 is an elevation front view,

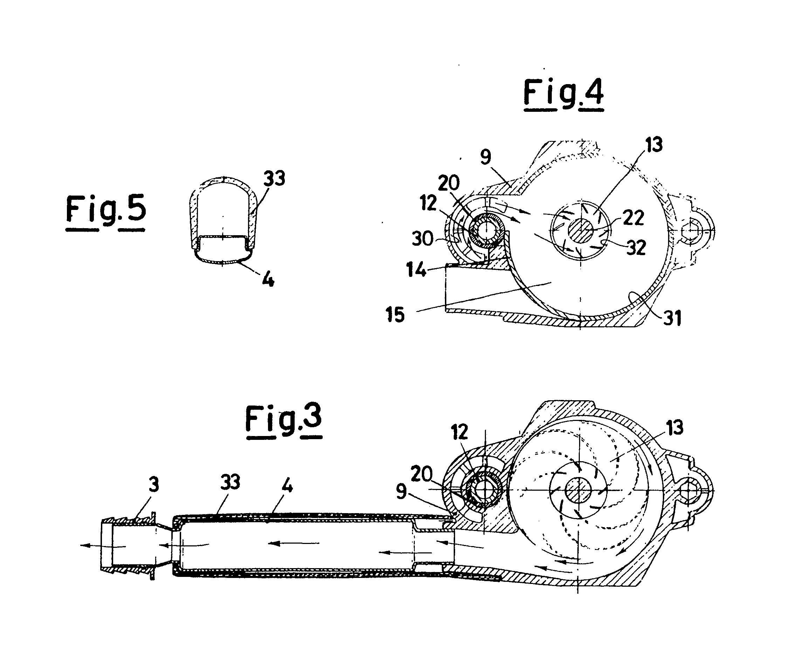

Figs. 3, 4 and 5 are sections respectively along the lines III-III, IV-IV and V-V of fig. 1;

Fig. 6 is a vertical section along the line VI-VI of fig. 2;

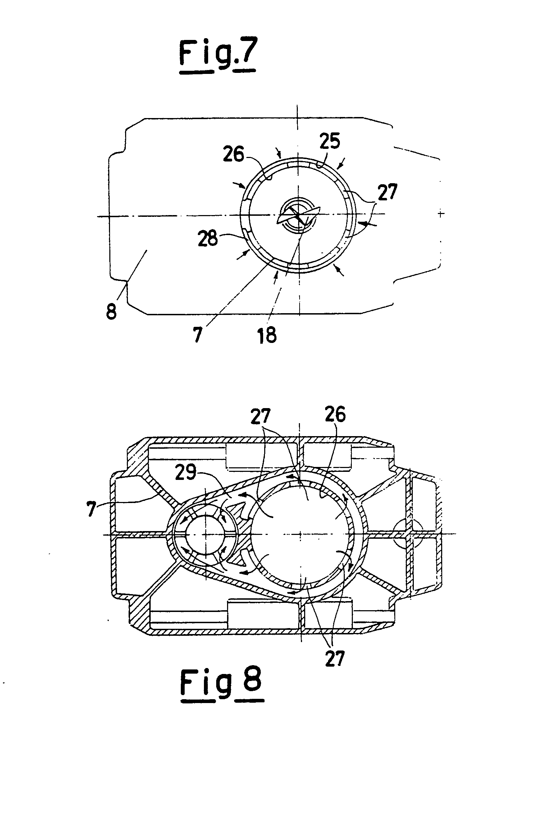

Fig. 7 is a view from the bottom according to the arrow VII of fig. 1;

Fig. 8 is a section along the line VIII-VIII of fig. 1;

Figs. 9 and 10 show a section of the supporting plate with two different types of tools during the machining of e.g. wood, and

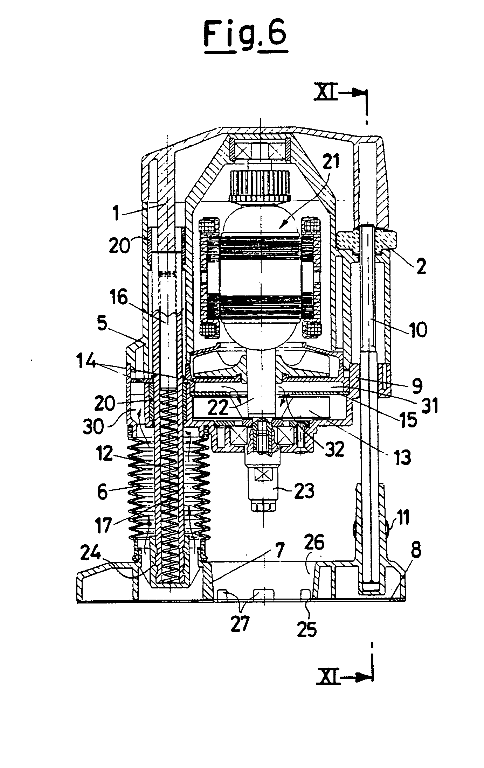

Fig. 11 is a section along the line XI-XI of fig. 6. As it can be observed from the drawings, the portable electrical machine tool comprises a body formed by an upper closure cap 1, by a central portion 5 and by a lower portion 9, these parts being all rigidly connected with each other so as to constitute a single body which supports and encloses a vertical-axis electrical motor 21, whose shaft 22 bears at its lower end a mandrel 23 suitable to contain a tool 18. This body is guided, by means of sleeves 20, along a guide tube 12 rammed in correspondence with its lower end into a cup-shaped seat 24 provided in a supporting plate 7 inferiorly closed by a closure sheet 8, provided with a central aperture 25.

The plate 7 is provided with a central aperture 26 for the passage of the tool 18 during its motion downwards, to move from a rest position to a lowered-down operative position. Inside said aperture 26 a plurality of ports 27 are provided, which, together with an annular port 28, provided between said central aperture 25 and the walls of the central aperture 26, allow the exhausting towards at least one chamber duct 29.

On the end of said duct 29 a bellows element 6 is fastened, which concentrically surrounds the guide tube 12 wherein a spring or elastic element 17 is contained, acting between said cup-shaped seat 24 and a distancer rod 16, which normally holds the body of the machine tool in its lifted rest position by reacting on the upper cap 1. Advantageously, said distancer rod 16 may be varied in order to intervene on the load of the helical spring 17, allowing a more or less fast reverse stroke in case of machining operations of the plunging type.

A second duct 30 is thus accomplished, which delivers the exhausted dust/air mixture into a chamber 31, defined by an upper baffle wall 14 and by a lower baffle wall 15 provided with an annular and central opening 32, said chamber 31 being positioned above a fan 13 solidly keyed onto the shaft 22.

Said fan 13 directs air towards a discharge tubular element 4 ending into a connector or fitting 3, said tubular element 4 constituting moreover the lower portion of a gripping handle 33 which protrudes from the central portion 5 of the body of the machine. Within said gripping handle, essentially of a reverse-"U" shape, a feeding cable 34 for the motor 21 is housed.

Advantageously, an adjustment device, as indicated with 10, of the operating depth of the tool 18 inside an underlying material 19, e.g., wood, may be provided.

The adjustment device 10 is constituted by a shaped rod bearing a lower graduated portion 35, sliding within a suitable complementary seat 36, said complementary seat 36 being provided with a locking means 11, of the thumbscrew type with end locking screw acting on the same graduated portion.

A threaded upper portion 37 of the rod is complementarily coupled with a ring 2, it too threaded, rotatably positioned inside a seat 38 of the cap 1, from which it is partly protruding.

In the lower portion 9 of the body, in correspondence of said adjustment device, a seat 40 open outwards, wherein the graduated portion 35 slides, is provided, and inside the cap 1 an inner seat 39 is provided, inside which the threaded portion 37 slides.

It results thus very clear that, when a machining of the plunging type is to be carried out, by acting on the threaded ring 2 to cause the threaded portion 37 to slide inside its related seat 39 (see fig. 11), as a consequence the operating stroke of the tool machine, and more precisely of the same tool, is adjusted.

During this operation, the locking means 11 must not act on the graduated portion 35.

If on the contrary one wishes to carry out a trimming or milling operation with predetermined machning intervention depth, it is enough to act on the locking means 11, which, through the locking screw extending from it, acts on the graduated portion 35 of the rod, locking it.

Said device may consequently afford a double adjustment both of the plunging and/or of the pass-machining depth by means of a threaded ring 2, and of the material removal in position at fixed depth, by means of a locking means 11 for the guide elements of the downwards run from the rest position to the working position.

The operating fashion e.g. in the plunging mode of the electrical machine tool is disclosed hereinafter.

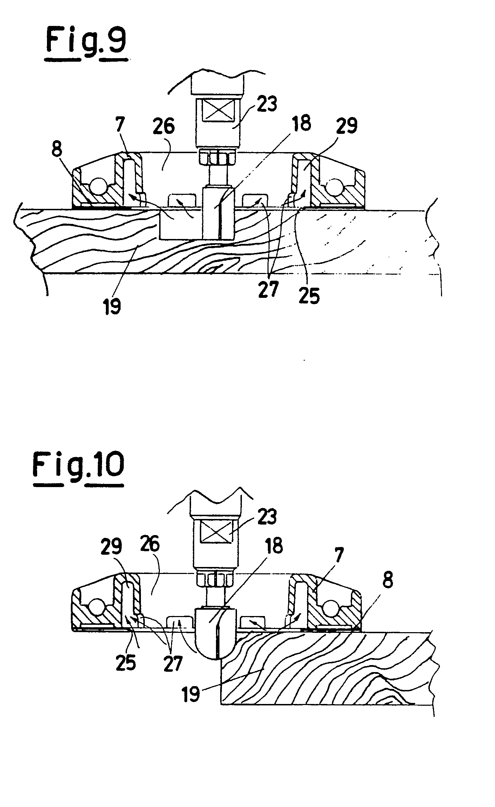

The working depth is preset and predetermined as hereinabove disclosed by acting on the threaded ring 2 and presetting hence the possible run downwards of the body along the guide tube 12 and consequently of the tool 18, e.g., into wood 19. By acting on the gripping handle 33 the downwards motion of the tool 18 towards the wood 19 is determined, thus starting the milling operation (fig. 9). The chips produced and the powder material generated are exhausted both through the annular port 28 and through the small ports 27 provided in the supporting plate 7.

They pass then into the first duct 29, into the second duct 30 of the bellows element 6 and from there into the chamber 31, from which they flow outwards as sucked by the fan 13 from the annular opening 32 towards the discharge tubular element 4, e.g., connected via the fitting 3 to a (not shown) container such as a bag or a pipe connected to a remote collector means (they too being not shown).

It can be noted that dust and chips of wood, or of other possible materials being handled, such as plastic material, fiberglass, etc., to not spread around thus disturbing the operator or hiding the concerned working area, but are withdrawn as soon as they are generated. The ducts 29, 30 and the channels of the fan exhausting system 13, as being completely housed within the machine tool, make it particularly practical in use, and particularly advantageous from the viewpoint of the overall dimensions.

The fan 13 may also not be provided, if one plans to connect the fitting 3 and consequently the end tubular element to a external (not shown) exhausting means.

A system of ducts and ports provided in the plate 7 and in its closure sheet 8 besides to the tubular element 4, intended for application under the gripping handle 33, allow a quick assembling and an as much quicker maintenance, without the provision or the connection of particular outer units or parts.

## Claims

1. Portable electrical milling and/or trimming tool for the machining of a material with the production of chips and/or dust, comprising a body encasing a vertical-axis electrical motor for the actuation of the tool, provided with a gripping handle and slidingly mounted by means of a guide system relatively to a support plate provided with a central aperture for the passage of the tool, characterized in that said machine incorporates a suction system for said chips and said dust comprising in said supporting plate at least a duct communicating on one side with suction openings coming in correspondence of said plate central aperture and on the other side with a duct concentrically formed around said guide system by a bellows sleeve surrounding this guide system, this latter duct being in its turn in communication, via channels provided inside the actuating motor enclosing body, with a tubular discharge element integrated inside the gripping handle, and ending with a connector.

2. Portable machine tool according to claim 1, characterized in that said channels provided inside the motor enclosing body comprise a chamber for an exhausting fan directly keyed onto the driving shaft.

3. Portable machine tool according to claim 1, characterized in that said central aperture of said supporting plate is defined by a closure sheet provided with a central aperture, and defining moreover an exhaust annular port concentrically outer relatively to said suction openings.

4. Portable machine tool according to claim 1, characterized in that said guide system is at least a hollow tube inside which an elastic element acting between said support plate and an upper cap of said body is positioned.

5. Portable machine tool according to claim 1, characterized in that said discharge tubular element integrated inside the gripping handle is additionally a closure half-element for said gripping handle, having a reverse-"U" shape.

6. Portable machine tool according to claims 1 and 2, characterized in that within said body, above said fan a suction chamber is provided, defined by an upper wall and by a lower wall, said chamber being connected on one side to said bellows duct, and on the other side to the seat of said fan via an annular opening.

7. Portable machine tool according to claim 1, characterized in that said guide system comprises a plurality of elements, at least one of said guide elements being constituted by a rod bearing a graduated portion and a threaded portion, said graduated portion being sliding inside a seat provided in said supporting plate, a locking means for said rod being provided, and said threaded portion complementarily coupling within a ring, it too threaded, rotatably positioned inside said upper body, elastic elements acting between said plate and said body being moreover provided.

8. Portable machine tool according to claim 4, characterized in that inside said at least one hollow tube a spacer element is additionally provided.

## Patentansprüche

1. Tragbares elektrisches Fräs und/oder Feinbearbeitungswerkzeug für die Bearbeitung eines Materials mit Anfall von Spänen und/oder Staub, umfassend ein Gehäuse, das einen eine vertikale Achse aufweisenden Elektromotor zur Betätigung des Werkzeugs umschließt, ausgestattet mit einem Handgriff und verschieblich durch ein Führungssystem in bezug auf eine Lagerplatte montiert, welche eine Mittelöffnung für den Durchgang des Werkzeugs aufweist, dadurch gekennzeichnet, daß die Maschine eine Absaugsystem für die Späne und den Staub aufweist, welches in der Lagerplatte mindestens einen Strömungsweg enthält, der auf einer Seite mit Saugöffnungen, die mit der Platten-Mittelöffnung in Korrespondenz sind, und auf der anderen Seite mit einem Strömungsweg kommuniziert, der konzentrisch um das Führungssystem durch eine dieses Führungssystem umgebende Balg-Hülse gebildet ist, wobei der letztgenannte Strömungsweg seinerseits über im Inneren des den Betätigungsmotor umschließenden Gehäuses vorhandene Kanäle strömungsverbunden ist mit einem rohrförmigen Austragelement, das im Inneren des Handgriffs integriert ist und mit einem Verbindungsstück abschließt.

2. Tragbares Werkzeug nach Anspruch 1, dadurch gekennzeichnet, daß die im Inneren des den Motor umschließenden Gehäuses vorgesehenen Kanäle eine Kammer für ein Absauggebläse enthalten, welches direkt auf der Antriebswelle befestigt ist.

3. Tragbares Werkzeug nach Anspruch 1, dadurch gekennzeichnet, daß die Mittelöffnung der Lagerplatte definiert ist durch ein Verschlußblatt mit einer Mittelöffnung und außerdem einen ringförmigen Absaugeinlaß konzentrisch auf der Außenseite bezüglich der Saugöffnungen definiert.

4. Tragbares Werkzeug nach Anspruch 1, dadurch gekennzeichnet, daß das Führungssystem zumindest ein hohles Rohr aufweist, in dessen Innerem ein elastisches Element angeordnet ist, das zwischen der Lagerplatte und einer oberen Schale des Gehäuses wirkt.

5. Tragbares Werkzeug nach Anspruch 1, dadurch gekennzeichnet, daß das rohrförmige Austragelement, das im Inneren des Handgriffs' ausgebildet ist, zusätzlich ein schließendes Halbelement für den Handgriff mit einer umgedrehten "U"-Form ist.

6. Tragbares Werkzeug nach Anspruch 1 und 2, dadurch gekennzeichnet, daß im Inneren des Gehäuses oberhalb des Gebläses eine Saugkammer vorgesehen ist, die definiert ist durch eine obere und eine untere Wand, und daß die Kammer an einer Seite mit dem Balg-Strömungsweg und an der anderen Seite mit dem Sitz des Gebläses über eine Ringöffnung verbunden ist.

7. Tragbares Werkzeug nach Anspruch 1, dadurch gekennzeichnet, daß das Führungssystem mehrere Elemente enthält, daß zumindest eines der Führungselemente durch eine Stange gebildet ist, die einen abgestuften Abschnitt und einen Gewindeabschnitt enthält, von denen der abgestufte Abschnitt im Inneren eines in der Lagerplatte befindlichen Sitzes gleitet, daß eine Verriegelungseinrichtung für die Stange vorgesehen ist, und daß der Gewindeabschnitt komplementär gekoppelt ist mit einem ebenfalls mit Gewinde versehenen Ring, der drehbar im Inneren des oberen Gehäuses positioniert ist, wobei zusätzlich elastische Elemente vorgesehen sind, die zwischen der Platte und dem Gehäuse wirken.

8. Tragbares Werkzeug nach Anspruch 4, dadurch gekennzeichnet, daß im Inneren des zumindest einen hohlen Rohrs ein Abstandselement zusätzlich vorgesehen ist.

**Revendications**

1. Fraiseuse et (ou) rogneuse électrique portative pour l'usinage d'une matière avec production de copeaux et (ou) de poussière, comprenant un corps enfermant un moteur électrique à axe vertical pour entraîner l'outil, pourvu d'une poignée de saisie et monté de manière à coulisser, au moyen d'un système de guidage par rapport à un plateau de support pourvu d'une ouverture centrale pour le passage de l'outil, caractérisé en ce que cette machine comprend un système d'aspiration des copeaux et de la poussière comportant dans le plateau de support au moins un conduit communiquant d'un côté avec les ouvertures d'aspiration qui correspondent avec l'ouverture centrale du plateau et de l'autre côtè avec un conduit formé concentriquement autour du système de guidage par un manchon à soufflet entourant ce système de guidage, ce dernier conduit communiquant à son tour, par l'intermédiaire de canaux prévus à l'intérieur du corps enfermant le moteur d'entraînement, avec un élément tubulaire d'évacuation intègré à la poignée de saisie, et-se terminant par un raccord.

2. Machine portative suivant la revendication 1, caractérisée en ce que ces canaux prévus à l'intérieur du corps enfermant le moteur comprennent une chambre pour un ventilateur aspirant claveté directement sur l'arbre d'entraînement.

3. Machine portative suivant la revendication 1, caractérisée en ce que l'ouverture centrale de ce plateau de support est formée par une tôle de fermeture pourvue d'une ouverture centrale, et formant en outre un orifice annulaire d'échappement concentriquement extérieur par rapport aux ouvertures d'aspiration.

4. Machine portative suivant la revendication 1, caractérisée, en ce que le système de guidage est au moins un tube creux à l'intérieur duquel est placé un élément élastique agissant entre le plateau de support et le chapeau supérieur du corps.

5. Machine portative suivant la revendication 1, caractérisée en ce que l'élément tubulaire d'évacuation intégré à la poignée de saisie est en outre un demi-élément de fermeture de cette poignée de saisie, aant la forme d'un U renversé.

6. Machine portative suivant les revendications 1 et 2, caractérisée en ce que à l'intérieur du corps, au-dessus du ventilateur, est prévue une chambre d'aspiration, délimitée par une paroi supérieure et par une paroi inférieure, cette chambre étant reliée d'un côté au conduit à soufflet, et de l'autre côté au siège d'un ventilateur par l'intermédiaire d'une ouverture annulaire.

7. Machine portative suivant la revendication 1, caractérisée en ce que le système de guidage comprend une pluralité d'éléments, au moins un de ces éléments de guidage étant constitué d'une tige portant une partie graduée et une partie filetée, cette partie graduée coulissant à l'intérieur d'un siège prévu dans la table de support, un moven de verrouillage de cette tige étant prévu, et la partie filetée étant accouplée de manière complémentaire à l'intérieur d'une bague également filetée, placée de manière à pouvoir tourner à l'intérieur du corps supérieur, des éléments élastiques agissant entre le plateau et le corps étant en outre prévus.

8. Machine portative suivant la revendication 4, caractérisée en ce que, à l'intérieur d'au moins un tube creux, est en outre prévu un élément d'espacement.

Fig.1

0 191 509

# Fig.2

# Fig.11

2

0 191 509

**Fig.4**

**Fig.5**

**Fig.3**

# Fig.6

## Fig.7

## Fig 8

## Fig.9

## Fig.10